# EUROPEAN PATENT APPLICATION

(11) **EP 4 414 049 A1**
(43) Date of publication of application: **14.08.2024**
(21) Application number: 22883004.8
(22) Date of filing: 24.10.2022
(51) Int. Cl.: B01D 53/14, B01D 53/62, C01B 32/50

(54) **CARBON DIOXIDE ABSORPTION LIQUID AND METHOD FOR CAPTURING CARBON DIOXIDE FROM FUEL GAS**

(30) Priority: 22.10.2021 CN 202111237906
(71) Applicant: China Petroleum & Chemical Corporation, Beijing 100728 (CN); Sinopec Nanjing Research Institute of Chemical Industry Co., Ltd., Nanjing, Jiangsu 210048 (CN)
(72) Inventor: HUANG, Hangen, Jiangsu 210048 (CN); MAO, Songbai, Jiangsu 210048 (CN); CHEN, Xi, Jiangsu 210048 (CN); WANG, Dong, Jiangsu 210048 (CN); GUO, Benshuai, Jiangsu 210048 (CN); YE, Ning, Jiangsu 210048 (CN)
(74) Representative: karo IP
(86) International application number: PCT/CN2022/127150
(87) International publication number: WO 2023/066400

(57) **Abstract**

The present disclosure relates to the technical field of carbon dioxide gas separation. Disclosed are a carbon dioxide absorption liquid, as well as a method and a device for capturing carbon dioxide from a fuel gas. The carbon dioxide absorption liquid comprises 100 parts by weight of a solvent, 10-55 parts by weight of an amino acid, 20-65 parts by weight of an organic amine, 5-15 parts by weight of an activator, and 2-12 parts by weight of an accelerator. According to the carbon dioxide absorption liquid provided in the present disclosure, by means of the synergistic effect of the amino acid, the organic amine, the activator and the accelerator, not only can the absorption capacity of the carbon dioxide absorption liquid for carbon dioxide be improved, but the regeneration energy consumption of the carbon dioxide absorption liquid can also be reduced, such that high-purity carbon dioxide is obtained.

## Description

### CROSS-REFERENCE TO RELATED APPLICATIONS

The application claims the benefit of the Chinese patent application No. "202111237906.1", filed on October 22, 2021, entitled "CARBON DIOXIDE ABSORPTION LIQUID AND METHOD FOR CAPTURING CARBON DIOXIDE FROM FUEL GAS", the content of which is entirely incorporated herein by reference.

### TECHNICAL FIELD

The present disclosure relates to the technical field of carbon dioxide gas separation, in particular to a carbon dioxide absorption liquid and a method for capturing carbon dioxide from a fuel gas.

### BACKGROUND ART

Along with the increasingly exacerbated domestic and international environmental problems, the emission control of greenhouse gases has emerged as a focus of attention for the international community, it is especially important and urgent to control the emission of CO₂ and alleviate the greenhouse effect.

The generation of a large amount of carbon dioxide is accompanied by the production process of the fuel gas such as oilfield associated gas, PSA regeneration gas, biogas, and biological pyrolysis gas, the removal of carbon dioxide in gases is critical for reducing the greenhouse gas emission, improving the energy grade and enhancing the subsequent utilization in the chemical industry.

At present, the methods for capturing CO₂ mainly include the chemical absorption method, adsorption method, membrane separation method, membrane absorption method, cryogenic distillation method, and the like, wherein the chemical absorption method is the most widely used. However, the chemical absorption method generally has many defects, namely the small carbon dioxide adsorption capacity, the large regeneration energy consumption of absorption liquid, the poor effect of capturing the highly-acidic raw material gas, and difficulty in separating the high-purity carbon dioxide.

Therefore, it is urgent to provide a carbon dioxide absorption liquid that has a large carbon dioxide adsorption capacity and a small regeneration energy consumption, can be used for treating highly-acidic raw material gas, and can produce high-purity carbon dioxide.

### SUMMARY OF THE INVENTION

The present disclosure aims to solve the technical problems of the chemical absorption method such as the small carbon dioxide adsorption capacity, the large regeneration energy consumption of absorption liquid, the poor effect of capturing the highly-acidic raw material gas, and difficulty in separating the high-purity carbon dioxide, and provides a carbon dioxide absorption liquid and a method for capturing carbon dioxide from fuel gas.

In order to achieve the above object, the first aspect of the present disclosure provides a carbon dioxide absorption liquid, wherein the carbon dioxide absorption liquid comprises 100 parts by weight of a solvent, 10-55 parts by weight of an amino acid, 20-65 parts by weight of an organic amine, 5-15 parts by weight of an activator, and 2-12 parts by weight of an accelerator;

wherein the activator comprises an activator I and an activator II, the activator I is at least one selected from the group consisting of alkyl quaternary ammonium ionic liquid, alkyl quaternary phosphonium ionic liquid and pyridine ionic liquid; the activator II is at least one selected from the group consisting of diamino quaternary phosphonium ionic liquid, amine-functionalized imidazole ionic liquid, diamine functionalized ionic liquid, amino acid ionic liquid, tetramethylguanidine succinate ionic liquid, tetramethylguanidine dodecanedicarboxylate ionic liquid and tetramethylguanidine polyethylene glycol dicarboxylate ionic liquid.

The second aspect of the present disclosure provides a method for capturing carbon dioxides from a fuel gas comprising the following steps:
(1) subjecting the fuel gas and the lean liquid to an indirect contact mass transfer through a porous membrane to obtain a rich liquid and purified fuel gas; wherein the lean liquid is selected from the carbon dioxide absorption liquid according to the first aspect of the present disclosure;
(2) regenerating the rich liquid to obtain a regenerated lean liquid and a regenerated gas;
(3) returning the regenerated lean liquid to step (1) as a lean liquid.

Due to the technical scheme, the present disclosure produces favorable technical effects as follows:
1) The carbon dioxide absorption liquid provided by the present disclosure not only can improve the absorption capacity of the carbon dioxide absorption liquid for carbon dioxide, but also can reduce the regeneration energy consumption of the carbon dioxide absorption liquid by means of the synergistic effect of the amino acid, the organic amine, the activator, and the accelerator, thereby obtaining the high-purity carbon dioxide.
2) When the carbon dioxide absorption liquid provided by the present disclosure comprises activator I and activator II, the synergistic effect of the increased used amount of an amino acid and the specific dosage of an organic amine can further improve the carbon dioxide removal rate and reduce regeneration energy consumption to obtain the high-purity regeneration gas.
3) The carbon dioxide absorption liquid provided by the present disclosure can further improve the carbon dioxide capture effect of the decarbonization solvent, reduce regeneration energy consumption, and obtain the high-purity carbon dioxide by reasonably adjusting the mass ratio of the activator I to the activator II.
4) The method for capturing carbon dioxide from a fuel gas provided by the present disclosure can improve the capturing effect of carbon dioxide through the combined action of the porous membrane and the specific lean liquid, and obtain the purified fuel gas with a dry basis content of carbon dioxide less than 3 v%.

### BRIEF DESCRIPTION OF THE DRAWINGS

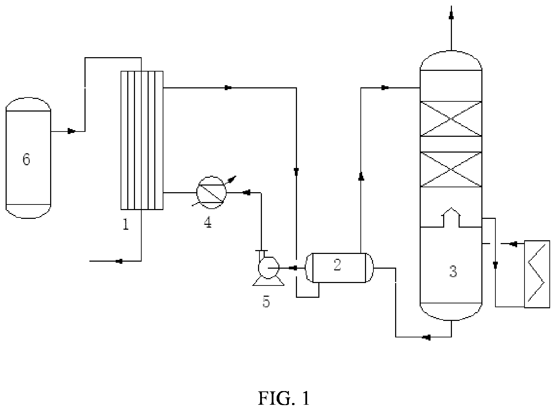

FIG. 1 is a schematic view of a device for capturing carbon dioxide from a fuel gas in the present disclosure.

### THE DESCRIPTION OF REFERENCE SIGNS

1. Membrane absorber
2. Heat exchanger
3. Regeneration tower
4. Lean liquid cooler
5. Lean liquid pump
6. Fuel gas storage tank

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

The first aspect of the present disclosure provides a carbon dioxide absorption liquid comprising 100 parts by weight of a solvent, 10-55 parts by weight of an amino acid, 20-65 parts by weight of an organic amine, 5-15 parts by weight of an activator, and 2-12 parts by weight of an accelerator;
wherein the activator comprises an activator I and an activator II, the activator I is at least one selected from the group consisting of alkyl quaternary ammonium ionic liquid, alkyl quaternary phosphonium ionic liquid, and pyridine ionic liquid;
the activator II is at least one selected from the group consisting of diamino quaternary phosphonium ionic liquid, amine-functionalized imidazole ionic liquid, diamine functionalized ionic liquid, amino acid ionic liquid, tetramethylguanidine succinate ionic liquid, tetramethylguanidine dodecanedicarboxylate ionic liquid and tetramethylguanidine polyethylene glycol dicarboxylate ionic liquid.

In a preferred embodiment, the carbon dioxide absorption liquid comprises 100 parts by weight of a solvent, 15-35 parts by weight, preferably 30-35 parts by weight of an amino acid, 25-50 parts by weight, preferably 45-50 parts by weight of an organic amine, 6-10 parts by weight, preferably 5-10 parts by weight of an activator, and 3-5 parts by weight, preferably 4-5 parts by weight of an accelerator.

When the used amounts of an amino acid, an organic amine, an activator, an activator, and an accelerator of the present disclosure are defined within the above ranges, the carbon dioxide capture effect of the carbon dioxide absorption liquid is optimal.

In a preferred embodiment, the mass ratio of the amino acid to the organic amine is 0.5-1: 1, preferably 0.6-0.8: 1.

The commonly used absorbent in the field of capturing carbon dioxide is an organic amine or an amino acid salt, or an organic amine added with a small amount of amino acid. However, the inventors of the present disclosure have discovered through research that by using an amino acid, an organic amine, an activator, and an accelerator simultaneously, and when the activator comprises an activator I and an activator II, the used amount of the amino acid is increased, such that the amino acid in specific amounts and the organic amine generate the synergistic action, the carbon dioxide removal rate can be further increased, the regeneration energy consumption can be reduced, and the high-purity regeneration gas can be obtained.

In a preferred embodiment, the amino acid is at least one selected from the group consisting of glycine, sarcosine, lysine, alanine, glutamic acid, serine, glycine, proline, arginine, and histidine, preferably one of glycine, sarcosine, lysine, and alanine.

In a preferred embodiment, the organic amine is at least one selected from the group consisting of N-methyl monoethanolamine (MMEA), 2-amino-2-methyl-1-propanol (AMP), N-methyl diethanolamine (MDEA), monoethanolamine (MEA), diethanolamine (DEA), diisopropanolamine (DIPA), isopropylaminoethanol (IPAE), hydroxyethylpiperazine (HEPZ), morpholine (MOR), 1,8-Diazabicyclo[5.4.0]undec-7-ene (DBU) and derivatives thereof, preferably at least one selected from the group consisting of N-methyl monoethanolamine, 2-amino-2-methyl-1-propanol, and N-methyl diethanolamine.

In a preferred embodiment, the mass ratio of activator I to activator II is within a range of 1: 1-8.5, preferably is within a range of 1: 2.5-5.

By reasonably adjusting the mass ratio of activator I to activator II in the present disclosure, the carbon dioxide capture effect of the decarbonization solvent can be further improved, the regeneration energy consumption is reduced, and the high-purity carbon dioxide is obtained.

In a preferred embodiment, the present disclosure does not impose specific limitations to alkyl quaternary ammonium ionic liquid, alkyl quaternary phosphonium ionic liquid, and pyridine ionic liquid, thus the alkyl quaternary ammonium ionic liquid, alkyl quaternary phosphonium ionic liquid and pyridine ionic liquid commonly used in the art can be applied in the present disclosure.

In a preferred embodiment, the activator I is one selected from the group consisting of alkyl phosphine tetrafluoroborate ([PRₓH₄₋ₓ]⁺[BF₄]⁻), alkyl amine hexafluorophosphate ([NRₓH₄₋ₓ]⁺[PF₆]⁻), alkyl pyridine aluminum chloride salt ([RPy]⁺[AlCl₄]⁻). Wherein x is an integer from 1 to 4, R is an alkyl having 1-20 carbon atoms, preferably an alkyl having 6-16 carbon atoms, and the number x of R groups may be the same or different, and each independently, for example, maybe hexyl, heptyl, octyl, nonyl, decyl, undecyl, dodecyl, tetradecyl, hexadecyl. Further preferably, the activator I is one selected from the group consisting of trihexyl tetradecyl tetrafluoro phosphonium borate, tetraalkylammonium tetrafluoroborate, and cetylpyridinium chloride.

In a preferred embodiment, the activator II is at least one selected from the group consisting of 3-propylamino-tributyl-triglycinate ([aP₄₄₄₃][Gly]), 3-propylamino-tributyl-phosphonium-alanate ([aP₄₄₄₃][Ala]), glycine tetraethylammonium ([N₂₂₂₂][Gly]), glycine tetrabutylammonium ([N₄₄₄₄][Gly]), glycine tetrabutylphosphonium ([P₄₄₄₄][Gly]), 1 -aminopropyl-3-methylimidazoglycinate ([APmim] [Gly]), 3-propylamino-tributylphosphonium-2-hydroxypyridine ([aP₄₄₄₃][2-Op]). Further preferably, the activator II is one selected from the group consisting of [P₄₄₄₄][Gly], [aP₄₄₄₃][2-Op], [aP₄₄₄₃][Gly].

In a preferred embodiment, the accelerator is selected from sodium chloride and/or potassium chloride, preferably is sodium chloride.

In a preferred embodiment, the solvent in the absorption liquid is selected from water.

The second aspect of the present disclosure provides a method for capturing carbon dioxides from a fuel gas comprising the following steps:
(1) subjecting the fuel gas and the lean liquid to an indirect contact mass transfer through a porous membrane to obtain a rich liquid and purified fuel gas; wherein the lean liquid is selected from the carbon dioxide absorption liquid according to the first aspect of the present disclosure;
(2) regenerating the rich liquid to obtain a regenerated lean liquid and a regenerated gas;
(3) returning the regenerated lean liquid to step (1) as a lean liquid.

In step (1):
In a preferred embodiment, the fuel gas is selected from the highly acidic fuel gas; wherein the dry basis content of carbon dioxide in the highly acidic fuel gas is within a range of 15-60 v%, preferably 25-50 v%.

In a preferred embodiment, the highly acidic fuel gas is at least one selected from the group consisting of oilfield associated gas, PSA regeneration gas, biogas, and biological pyrolysis gas.

Wherein the PSA regeneration gas is the pressure swing adsorption regeneration gas in the field. The method for capturing carbon dioxide from a fuel gas provided by the present disclosure does not impose particular limitations on the fuel gas, in particular, the method used for treating highly-acidic fuel gas has a dry basis content of carbon dioxide being more than 15 v%.

In a preferred embodiment, the flow ratio of the fuel gas to the absorption liquid is 1Nm³/h: 10-80L/h, preferably 1Nm³/h: 20-50L/h.

In a preferred embodiment, the porous membrane is selected from the pressure-resistant porous membrane, preferably a hollow fiber membrane; wherein the hollow fiber membrane has a membrane filament inner diameter of 40-60mm, preferably 45-55mm, and a membrane filament outer diameter of 0.5-1.2mm, preferably 0.8-0.9mm.

In a preferred embodiment, the operating conditions for indirect contact mass transfer comprise: a mass transfer temperature within a range of 25-80°C, preferably within a range of 35-50°C, and a mass transfer pressure within a range of 1-20MPa, preferably within a range of 4.0-16.0MPa.

In a preferred embodiment, the purified fuel gas has a dry basis content of carbon dioxide less than 3 v%, preferably within a range of 1.5-2.5 v%.

The method for capturing carbon dioxide from a fuel gas provided by the present disclosure can further improve the capturing effect of carbon dioxide through the combined action of the porous membrane and the specific lean liquid, so as to obtain the purified fuel gas with the dry basis content of carbon dioxide less than 3 v%, and the purified fuel gas can reach the industrial production index.

In step (2):
In a preferred embodiment, the regeneration of the rich liquid is not particularly limited in the present disclosure, the regeneration can be performed according to the conventional operation in the field. For example, the rich liquid is pumped to the regeneration tower for regeneration.

In a preferred embodiment, the dry basis content of carbon dioxide in the regeneration gas is 95v% or more, preferably 98v% or more, and further preferably 99.5v% or more.

In the present disclosure, the regeneration gas obtained after regeneration contains a small amount of water in addition to the carbon dioxide, thus the regeneration gas may be subjected to a dehydration operation in order to obtain a high-purity regeneration gas. The method for removing water from the regeneration gas is not particularly limited in the present disclosure, the dehydration can be performed according to the conventional operation in the field. For example, the regeneration gas may be subjected to condensation to remove water.

In a preferred embodiment, the regeneration energy consumption in the regeneration process is within a range of 1.8-2.9×10³kcal/Nm³CO₂, preferably 1.8-2.1×10³ kcal/Nm³CO₂.

In step (3):
In a preferred embodiment, the regenerated lean liquid is returned to step (1) after the heat exchange with the rich liquid.

In the present disclosure, if the temperature of the regenerated lean liquid after the heat exchange between the regenerated lean liquid and the rich liquid is still relatively high and cannot meet the operating condition of indirect contact mass transfer, the regenerated lean liquid after the heat exchange can be further subjected to a cooling operation.

The present disclosure will be described in detail below with reference to examples. The following examples and comparative examples were implemented in the device shown in FIG. 1, the device included a membrane absorber 1, a heat exchanger 2, a regeneration tower 3, a lean liquid cooler 4, a lean liquid pump 5 and fuel gas storage tank 6; wherein a rich liquid outlet of the membrane absorber 1 was connected with the heat exchange 2 and the top of the regeneration tower 3 in sequence, the bottom of the regeneration tower 3 was connected with the heat exchange 2, the lean liquid pump 5, the lean liquid cooler 4, and the lean liquid inlet of the membrane absorber 1 in sequence, the fuel gas storage tank 6 was connected with the membrane absorber 1.

Wherein the membrane adsorbent 1 was a membrane absorber comprising a hollow fiber membrane, which was purchased from the Dalian Institute of Chemical Physicals, Chinese Academy of Sciences. The dry basis content of CO₂ was measured with a flue gas analyzer, and the regeneration energy consumption = regeneration heating amount/yield of CO₂, wherein the regeneration heating amount was denoted in the unit of kcal, and the yield of CO₂ was denoted in the unit of Nm³.

### Example 1

(1) The simulated highly-acidic fuel gas (dry basis content of CO₂ was 40v%, and the balance gas was N₂) with a flow rate of 2.0Nm³/h from a fuel gas storage tank 6 and the lean liquid (its composition was shown in Table 1) with a flow rate of 40L/h were introduced into a membrane absorber 1, the highly-acidic fuel gas and the lean liquid respectively flows on the side of a hollow fiber membrane, an indirect contact mass transfer was carried out through the hollow fiber membrane under the conditions comprising a temperature of 40°C and a pressure of 8.0MPa to obtain a rich liquid and a purified fuel gas;
(2) The rich liquid was introduced into a regeneration tower 3 for regeneration, a regenerated lean liquid was obtained from the bottom of said regeneration tower 3, and a regeneration gas was obtained from the top of said regeneration tower 3;
(3) The regenerated lean liquid was initially subjected to a heat exchange in the heat exchanger 2 with the rich liquid from the membrane absorber 1, subsequently passed through the lean liquid pump 5 and cooled in the lean liquid cooler 4, then returned to the membrane absorber 1 as the lean liquid.

Wherein the dry basis content of CO₂ in the obtained purified fuel gas was 1.8v%, the purity of CO₂ in the obtained regeneration gas was more than or equal to 99.5% (dry basis), and the regeneration energy consumption was 2.1×10³ kcal/Nm³CO₂.

### Example 2

The method of capturing carbon dioxide from a fuel gas was performed in the same mode as that in Example 1, except that the lean liquids were different, the composition of the lean liquid in Example 2 was as shown in Table 1.

Wherein the dry basis content of CO₂ in the obtained purified fuel gas was 1.5v%, the purity of CO₂ in the obtained regeneration gas was more than or equal to 99.5% (dry basis), and the regeneration energy consumption was 1.8×10³ kcal/Nm³CO₂.

### Example 3

The method of capturing carbon dioxide from a fuel gas was performed in the same mode as that in Example 1, except that the lean liquids were different, the composition of the lean liquid in Example 3 was as shown in Table 1.

Wherein the dry basis content of CO₂ in the obtained purified fuel gas was 2.0v%, the purity of CO₂ in the obtained regeneration gas was more than or equal to 99.5% (dry basis), and the regeneration energy consumption was 2.3×10³ kcal/Nm³CO₂.

### Example 4

The method of capturing carbon dioxide from a fuel gas was performed in the same mode as that in Example 1, except that the simulated highly-acidic fuel gas and the operating conditions of indirect contact mass transfer were different, the dry basis content of carbon dioxide in the simulated highly-acidic fuel gas in Example 4 was 50v%, and the N₂ content was 50 v%; the indirect contact mass transfer was carried out through the hollow fiber membrane under the conditions comprising a temperature of 40°C and a pressure of 16.0MPa.

Wherein the dry basis content of CO₂ in the obtained purified fuel gas was 2.3v%, the purity of CO₂ in the obtained regeneration gas was more than or equal to 99.5% (dry basis), and the regeneration energy consumption was 2.6×10³ kcal/Nm³CO₂.

### Example 5

The method of capturing carbon dioxide from a fuel gas was performed in the same mode as that in Example 4, except that the lean liquids were different, the composition of the lean liquid in Example 5 was as shown in Table 1.

Wherein the dry basis content of CO₂ in the obtained purified fuel gas was 2.1v%, the purity of CO₂ in the obtained regeneration gas was more than or equal to 99.5% (dry basis), and the regeneration energy consumption was 2.3×10³ kcal/Nm³CO₂.

### Example 6

The method of capturing carbon dioxide from a fuel gas was performed in the same mode as that in Example 4, except that the lean liquids were different, the composition of the lean liquid in Example 6 was as shown in Table 1.

Wherein the dry basis content of CO₂ in the obtained purified fuel gas was 2.5v%, the purity of CO₂ in the obtained regeneration gas was more than or equal to 99.5% (dry basis), and the regeneration energy consumption was 2.5×10³ kcal/Nm³CO₂.

### Example 7

The method of capturing carbon dioxide from a fuel gas was performed in the same mode as that in Example 4, except that the lean liquids were different, the composition of the lean liquid in Example 7 was as shown in Table 1.

Wherein the dry basis content of CO₂ in the obtained purified fuel gas was 3.0v%, the purity of CO₂ in the obtained regeneration gas was more than or equal to 99.5% (dry basis), and the regeneration energy consumption was 2.7×10³ kcal/Nm³CO₂.

### Example 8

The method of capturing carbon dioxide from a fuel gas was performed in the same mode as that in Example 4, except that the lean liquids were different, the composition of the lean liquid in Example 8 was as shown in Table 1.

Wherein the dry basis content of CO₂ in the obtained purified fuel gas was 2.8v%, the purity of CO₂ in the obtained regeneration gas was more than or equal to 99.5% (dry basis), and the regeneration energy consumption was 2.9×10³ kcal/Nm³CO₂.

### Comparative Example 1

The method of capturing carbon dioxide from a fuel gas was performed in the same mode as that in Example 1, except that the lean liquids were different, the composition of the lean liquid in Comparative Example 1 was as shown in Table 1.

Wherein the dry basis content of CO₂ in the obtained purified fuel gas was 2.9v%, the purity of CO₂ in the obtained regeneration gas was 90% (dry basis), and the regeneration energy consumption was 3.2×10³ kcal/Nm³CO₂.

### Comparative Example 2

The method of capturing carbon dioxide from a fuel gas was performed in the same mode as that in Example 4, except that the lean liquids were different, the composition of the lean liquid in Comparative Example 2 was as shown in Table 1.

Wherein the dry basis content of CO₂ in the obtained purified fuel gas was 3.0v%, the purity of CO₂ in the obtained regeneration gas was 88% (dry basis), and the regeneration energy consumption was 3.7×10³ kcal/Nm³CO₂.

### Comparative Example 3

The method of capturing carbon dioxide from a fuel gas was performed in the same mode as that in Example 4, except that the lean liquids were different, the composition of the lean liquid in Comparative Example 3 was as shown in Table 1.

Wherein the dry basis content of CO₂ in the obtained purified fuel gas was 3.1v%, the purity of CO₂ in the obtained regeneration gas was 85% (dry basis), and the regeneration energy consumption was 3.6×10³ kcal/Nm³CO₂.

### Comparative Example 4

The method of capturing carbon dioxide from a fuel gas was performed in the same mode as that in Example 4, except that the lean liquids were different, the composition of the lean liquid in Comparative Example 4 was as shown in Table 1.

Wherein the dry basis content of CO₂ in the obtained purified fuel gas was 3.0v%, the purity of CO₂ in the obtained regeneration gas was 90% (dry basis), and the regeneration energy consumption was 3.9×10³ kcal/Nm³CO₂.

As can be seen from the comparison results of Example 4, Comparative Example 3, and Comparative Example 4, an excessive or insufficient used amount of amino acid and organic amine was not conducive to increasing the absorption capacity of the carbon dioxide and reducing the regeneration energy consumption.

### Comparative Example 5

The method of capturing carbon dioxide from a fuel gas was performed in the same mode as that in Example 4, except that the lean liquids were different, the composition of the lean liquid in Comparative Example 5 was as shown in Table 1.

Wherein the dry basis content of CO₂ in the obtained purified fuel gas was 3.2v%, the purity of CO₂ in the obtained regeneration gas was 99% (dry basis), and the regeneration energy consumption was 3.7×10³ kcal/Nm³CO₂.

As can be seen from the comparison results of Example 4 and Comparative Example 5, when the amino acid was replaced by the amino acid salt, it was not conducive to decreasing the regeneration energy consumption and improving the absorption effect of carbon dioxide.

### Comparative Example 6

The method of capturing carbon dioxide from a fuel gas was performed in the same mode as that in Example 4, except that the lean liquids were different, the composition of the lean liquid in Comparative Example 6 was as shown in Table 1.

Wherein the dry basis content of CO₂ in the obtained purified fuel gas was 2.3v%, the purity of CO₂ in the obtained regeneration gas was 99% (dry basis), and the regeneration energy consumption was 3.1×10³ kcal/Nm³CO₂.

As can be seen from the comparison results of Example 4 and Comparative Example 6, the synergistic action of activator I and activator II can improve the absorption effect of carbon dioxide and decrease the regeneration energy consumption of the carbon dioxide absorption liquid, thereby obtaining the high-purity carbon dioxide. When the activator I was used, and the activator II was absent, the regeneration energy consumption of the carbon dioxide was significantly increased, which indicated that the desorption performance of the absorption liquid was poorer.

### Comparative Example 7

The method of capturing carbon dioxide from a fuel gas was performed in the same mode as that in Example 4, except that the lean liquids were different, the composition of the lean liquid in Comparative Example 7 was as shown in Table 1.

Wherein the dry basis content of CO₂ in the obtained purified fuel gas was 3.2v%, the purity of CO₂ in the obtained regeneration gas was 99% (dry basis), and the regeneration energy consumption was 2.6×10³ kcal/Nm³CO₂.

As can be seen from the comparison results of Example 4 and Comparative Example 7, when the activator I was used and the activator II was absent, the absorption capacity of the carbon dioxide absorption liquid for carbon dioxide was decreased, and the content of carbon dioxide in the purified fuel gas was higher.

### Comparative Example 8

The method of capturing carbon dioxide from a fuel gas was performed in the same mode as that in Example 4, except that the lean liquids were different, the composition of the lean liquid in Comparative Example 8 was as shown in Table 1, wherein the activator II was 1-butyl-3-methylimidazole sodium phosphate.

Wherein the dry basis content of CO₂ in the obtained purified fuel gas was 3.3v%, the purity of CO₂ in the obtained regeneration gas was 86% (dry basis), and the regeneration energy consumption was 2.8×10³ kcal/Nm³CO₂.

As can be seen from the comparison results of Example 4 and Comparative Example 8, the adsorption separation effect of carbon dioxide was poor when 1-butyl-3-methylimidazolium sodium phosphate and trihexyl tetradecyl tetrafluoro phosphonium tetrafluoroborate were used as the activator.

### Comparative Example 9

The method of capturing carbon dioxide from a fuel gas was performed in the same mode as that in Example 4, except that the lean liquids were different, the composition of the lean liquid in Comparative Example 9 was as shown in Table 1.

Wherein the dry basis content of CO₂ in the obtained purified fuel gas was 3.4v%, the purity of CO₂ in the obtained regeneration gas was 98.5% (dry basis), and the regeneration energy consumption was 2.7×10³ kcal/Nm³CO₂.

As can be seen from the comparison results of Example 4 and Comparative Example 9, the adsorption separation effect of carbon dioxide can be improved by adding the accelerator.

**Table 1**

| | The solvent of carbon dioxide absorption liquid is water and the used amounts of other ingredients relative to 100g of water /g | | | | |
|---|---|---|---|---|---|
| | Amino acid | Organic amine | Activator I | Activator II | Accelerat or |
| Example 1 | Glycine /35 | MMEA/ 50 | Trihexyl tetradecyltetrafluoro phosphonium borate /2 | [P₄₄₄₄][Gly] /8 | Sodium chloride/ 5 |
| Example 2 | Sarcosine 135 | AMP/50 | Hexadecyl trimethyl ammonium hexafluorophosphate /2 | [aP₄₄₄₃][2-Op] /8 | Sodium chloride/ 5 |
| Example 3 | Lysine /35 | MDEA/5 0 | Cetylpyridinium chloride /2 | [aP₄₄₄₃][Gly]/ 18 | Potassiu m chloride/5 |
| Example 4 | Glycine 135 | MMEA/ 50 | Trihexyl tetradecyltetrafluoro phosphonium borate /2 | [P₄₄₄₄][Gly] /8 | Sodium chloride/ 5 |
| Example 5 | Sarcosine 135 | AMP/50 | Hexadecyl trimethyl ammonium hexafluorophosphate /2 | [aP₄₄₄₃][2-Op] /8 | Sodium chloride/ 5 |
| Example 6 | Lysine /35 | MDEA/5 0 | Cetylpyridinium chloride /2 | [aP₄₄₄₃][Gly ] 18 | Potassiu m chloride/5 |
| Example 7 | Glycine /50 | MMEA/ 35 | Trihexyl tetradecyltetrafluoro phosphonium borate /2 | [P₄₄₄₄][Gly] /8 | Sodium chloride/ 5 |
| Example 8 | Glycine 141 | MMEA/ 41 | Trihexyl tetradecyltetrafluoro phosphonium borate /5 | [P₄₄₄₄][Gly] /10 | Sodium chloride/ 3 |
| Compar ative Example 1 | - | MDEA/7 0 DEA/30 | - | - | - |
| Compar ative Example 2 | - | MDEA/7 0 DEA/30 | - | - | - |
| Compar ative Example 3 | Glycine /5 | MMEA/ 80 | Trihexyl tetradecyltetrafluoro phosphonium borate /2 | [P₄₄₄₄][Gly] /8 | Sodium chloride/ 5 |
| Compar ative Example 4 | Glycine /80 | MMEA/ 5 | Trihexyl tetradecyltetrafluoro phosphonium borate /2 | [P₄₄₄₄][Gly] /8 | Sodium chloride/ 5 |
| Compar ative Example 5 | Sodium glutamate 35 | MMEA/ 50 | Trihexyl tetradecyltetrafluoro phosphonium borate /2 | [P₄₄₄₄][Gly] /8 | Sodium chloride/ 5 |
| Compar ative Example 6 | Glycine 135 | MMEA/ 50 | Trihexyl tetradecyltetrafluoro phosphonium borate /10 | - | Sodium chloride/ 5 |
| Compar ative Example 7 | Glycine 135 | MMEA/ 50 | - | [P₄₄₄₄][Gly] /10 | Sodium chloride/ 5 |
| Compar ative Example 8 | Glycine 135 | MMEA/ 50 | Trihexyl tetradecyltetrafluoro phosphonium borate /2 | 1-butyl-3-methylimid azolium sodium phosphate /8 | Sodium chloride/ 5 |
| Compar ative Example 9 | Glycine 135 | MMEA/ 50 | Trihexyl tetradecyltetrafluoro phosphonium borate /2 | [P₄₄₄₄][Gly] /8 | - |

The above content describes in detail the preferred embodiments of the present present disclosure, but the present present disclosure is not limited thereto. A variety of simple modifications can be made regarding the technical solutions of the present present disclosure within the scope of the technical concept of the present present disclosure, including a combination of individual technical features in any other suitable manner, such simple modifications and combinations thereof shall also be regarded as the content disclosed by the present present disclosure, each of them falls into the protection scope of the present present disclosure.

## Claims

1. A carbon dioxide absorption liquid comprising 100 parts by weight of a solvent, 10-55 parts by weight of an amino acid, 20-65 parts by weight of an organic amine, 5-15 parts by weight of an activator, and 2-12 parts by weight of an accelerator;
wherein the activator comprises an activator I and an activator II, the activator I is at least one selected from the group consisting of alkyl quaternary ammonium ionic liquid, alkyl quaternary phosphonium ionic liquid, and pyridine ionic liquid;
the activator II is at least one selected from the group consisting of diamino quaternary phosphonium ionic liquid, amine-functionalized imidazole ionic liquid, diamine functionalized ionic liquid, amino acid ionic liquid, tetramethylguanidine succinate ionic liquid, tetramethylguanidine dodecanedicarboxylate ionic liquid and tetramethylguanidine polyethylene glycol dicarboxylate ionic liquid.

2. The carbon dioxide absorption liquid of claim 1, wherein the carbon dioxide absorption liquid comprises 100 parts by weight of a solvent, 15-35 parts by weight of an amino acid, 25-50 parts by weight of an organic amine, 6-10 parts by weight of an activator, and 3-5 parts by weight of an accelerator.

3. The carbon dioxide absorption liquid of claim 2, wherein the carbon dioxide absorption liquid comprises 100 parts by weight of a solvent, 30-35 parts by weight of an amino acid, 45-50 parts by weight of an organic amine, 5-10 parts by weight of an activator, and 4-5 parts by weight of an accelerator.

4. The carbon dioxide absorption liquid of any one of claims 1-3, wherein the amino acid is at least one selected from the group consisting of glycine, sarcosine, lysine, alanine, glutamic acid, serine, glycine, proline, arginine, and histidine.

5. The carbon dioxide absorption liquid of claim 4, wherein the amino acid is one of glycine, sarcosine, lysine, and alanine.

6. The carbon dioxide absorption liquid of any one of claims 1-5, wherein the organic amine is at least one selected from the group consisting of N-methyl monoethanolamine, 2-amino-2-methyl-1-propanol, N-methyl diethanolamine, monoethanolamine, diethanolamine, diisopropanolamine, isopropylaminoethanol, hydroxyethylpiperazine, morpholine, 1,8-Diazabicyclo[5.4.0]undec-7-ene and derivatives thereof.

7. The carbon dioxide absorption liquid of claim 6, wherein the organic amine is at least one selected from the group consisting of N-methyl monoethanolamine, 2-amino-2-methyl-1-propanol, and N-methyl diethanolamine.

8. The carbon dioxide absorption liquid of any one of claims 1-7, wherein the mass ratio of the amino acid to the organic amine is within a range of 0.5-1: 1.

9. The carbon dioxide absorption liquid of claim 8, wherein the mass ratio of the amino acid to the organic amine is within a range of 0.6-0.8: 1.

10. The carbon dioxide absorption liquid of any one of claims 1-9, wherein the mass ratio of the activator I to the activator II is within a range of 1: 1-8.5.

11. The carbon dioxide absorption liquid of claim 10, wherein the mass ratio of activator I to activator II is within a range of 1: 2.5-5.

12. The carbon dioxide absorption liquid of any one of claims 1-11, wherein the activator I is one selected from the group consisting of alkyl phosphine tetrafluoroborate, alkyl amine hexafluorophosphate and alkyl pyridine aluminum chloride salt;
preferably, the activator I is one selected from the group consisting of trihexyl tetradecyltetrafluoro phosphonium borate, tetraalkylammonium tetrafluoroborate and cetylpyridinium chloride.

13. The carbon dioxide absorption liquid of any one of claims 1-12, wherein the activator II is at least one selected from the group consisting of 3-propylamino-tributyl-triglycinate, 3-propylamino-tributyl-phosphonium-alanate, glycine tetraethylammonium, glycine tetrabutylammonium, glycine tetrabutyl phosphonium, 1-aminopropyl-3-methylimidazoglycinate, 3-propylamino-tributylphosphonium-2-hydroxypyridine.

14. The carbon dioxide absorption liquid of any one of claims 1-13, wherein the accelerator is selected from sodium chloride and/or potassium chloride, and the solvent is selected from water.

15. A method for capturing carbon dioxides from fuel gas comprising the following steps:
(1) subjecting the fuel gas and the lean liquid to an indirect contact mass transfer through a porous membrane to obtain a rich liquid and purified fuel gas; wherein the lean liquid is selected from the carbon dioxide absorption liquid according to any one of claims 1-14;
(2) regenerating the rich liquid to obtain a regenerated lean liquid and a regenerated gas;
(3) returning the regenerated lean liquid to step (1) as a lean liquid.

16. The method of claim 15, wherein the fuel gas is selected from the highly acidic fuel gas; wherein the dry basis content of carbon dioxide in the highly acidic fuel gas is within a range of 15-60 v%.

17. The method of claim 16, wherein the dry basis content of carbon dioxide in the highly acidic fuel gas is within a range of 25-50 v%.

18. The method of claim 16 or 17, wherein the highly acidic fuel gas is at least one selected from the group consisting of oilfield associated gas, PSA regeneration gas, biogas, and biological pyrolysis gas.

19. The method of any one of claims 15-18, wherein the flow ratio of the fuel gas to the absorption liquid is 1Nm³/h: 10-80L/h.

20. The method of claim 19, wherein the flow ratio of the fuel gas to the absorption liquid is 1Nm³/h: 20-50L/h.

21. The method of any one of claims 15-20, wherein the porous membrane is a hollow fiber membrane.

22. The method of claim 21, wherein the hollow fiber membrane has a membrane filament inner diameter of 40-60mm and a membrane filament outer diameter of 0.5-1.2mm; preferably, the hollow fiber membrane has a membrane filament inner diameter of 45-55mm and a membrane filament outer diameter of 0.8-0.9mm.

23. The method of any one of claims 15-22, wherein the operating conditions for indirect contact mass transfer comprise: a mass transfer temperature within a range of 25-80°C and a mass transfer pressure within a range of 1-20MPa, preferably a mass transfer temperature within a range of 35-50°C and a mass transfer pressure within a range of 4-16MPa.
